# EUROPÄISCHE PATENTSCHRIFT

(11) **EP 3 221 621 B1**
(45) Veröffentlichungstag und Bekanntmachung des Hinweises auf die Patenterteilung: **16.05.2018**
(21) Anmeldenummer: 16787413.0
(22) Anmeldetag: 24.10.2016
(51) Int. Cl.: F16K 3/08, F16K 31/528

(54) **VENTILOBERTEIL**
VALVE TOP
PARTIE SUPÉRIEURE DE SOUPAPE

(30) Priorität: 19.01.2016 DE 202016100236 U
(43) Veröffentlichungstag der Anmeldung: 27.09.2017
(73) Patentinhaber: Flühs Drehtechnik GmbH, D-58515 Lüdenscheid (DE)
(72) Erfinder: THURAU, Friedrich, 58849 Herscheid (DE)
(74) Vertreter: Patentanwälte Dörner & Kötter PartG mbB
(86) Internationale Anmeldenummer: PCT/EP2016/075562
(87) Internationale Veröffentlichungsnummer: WO 2017/125176

(56) Entgegenhaltungen:
- DE-A1- 4 206 216
- DE-U1-202005 003 127
- DE-U1-202014 101 096
- US-A- 3 333 815
- US-A- 4 221 238
- US-A- 4 632 361

## Beschreibung

Die Erfindung betrifft ein Ventiloberteil mit einem Kopfstück, dass von einer Spindel axial durchsetzt ist, über die ein Ventil betätigbar ist, dass durch eine relativ zu einer Einlassscheibe drehbare Steuerscheibe gebildet ist.

Mit Hilfe von Ventiloberteilen wird der Austritt von Medien aus Armaturen gesteuert. Zu diesem Zweck wird das Ventiloberteil mittels seines Kopfstücks in das Gehäuse einer Armatur geschraubt. Auf seine Spindel wird ein Drehgriff oder Hebel gesteckt. Bei bekannten Ventiloberteilen (vgl. DE 20 2005 003 127 U1) sind zwei Scheiben zur Steuerung des Durchflusses vorgesehen, die aus keramischem Material hergestellt sind. Eine der beiden Scheiben - Steuerscheibe - ist mit Hilfe eines mit der Spindel in Verbindung stehenden Mitnehmers drehbar in dem Ventiloberteil angeordnet. Die andere Scheibe - Einlassscheibe - ist eine drehfest angeordnete Ventilsitzscheibe. Bei Drehung der Steuerscheibe gleiten die Scheiben aneinander. Auf der dem Ventilsitz des Gehäuses zugewandten Seite ist ein Dichtring angeordnet, der an der Einlassscheibe anliegt. Der Dichtring überragt die Stirnfläche des Ventiloberteils und dient zur Abdichtung der Einlassscheibe gegenüber dem Ventilsitz des Armaturengehäuses.

Ventile der vorgenannten Art werden sowohl als Absperrventil. als auch als Umschaltventile, beispielsweise zur Zuordnung eines Wasserstroms zu einem Badewannenauslauf oder einem Duschauslauf eingesetzt. Eine Drehung in eine Richtung bewirkt hier eine Wasserzufuhr durch einen Wasserhahn oder einen Schwallauslauf einer Badewanne. Eine Drehung in die entgegengesetzte Richtung leitet den Wasserstrom durch den Brausekopf einer Dusche. Bei der Gestaltung von Armaturen wird zunehmend eine Bedienung des Ventiloberteils über Drücker oder Taster gewünscht.

Hier setzt die vorliegende Erfindung an. Der Erfindung liegt die Aufgabe zu Grunde, ein Ventiloberteil bereitzustellen, das anstelle einer Drehbewegung die Ventilsteuerung durch eine Drückbewegung ermöglicht. Gemäß der Erfindung wird diese Aufgabe durch ein Ventiloberteil mit den Merkmalen des kennzeichnenden Teils des Patentanspruchs 1 gelöst.

Mit der Erfindung ist ein Ventiloberteil der vorgenannten Art bereitgestellt, das eine Ventilsteuerung durch eine Drückbetätigung ermöglicht. Dadurch, dass in der Mantelfläche der Spindel an ihrer der Steuerscheibe entgegen gerichteten Seite umlaufend eine Kurvenbahn eingebracht ist, in die wenigstens ein Nocken einer drehfest angeordneten auf die Spindel endseitig aufgestülpten Steuerhülse eingreift, die axial entlang der Spindel bewegbar ist, ist durch einen Druck auf die Steuerhülse eine axiale Bewegung der Steuerhülse bewirkt, wodurch die Umschaltung erzielt ist. Hierzu ist die Kurvenbahn derart ausgebildet, dass durch eine vertikale Verschiebung der Steuerhülse entlang der Spindel eine definierte Drehung der Spindel bewirkt ist.

In Weiterbildung der Erfindung weist die Steuerhülse zwei zueinander angeordnete Nocken auf, die bevorzugt diametral zueinander angeordnet sind. Hierdurch ist eine gleichmäßige Axialkraft auf die Wandungen der Kurvenbahn erzielt, welche die Drehbewegung der Spindel bewirkt. Besonders bevorzugt sind die Nocken an die Steuerhülse angeformt.

In Ausgestaltung der Erfindung verläuft die Kurvenbahn sägezahnförmig um die Mantelfläche der Spindel. Hierdurch ist eine definierte Drehbewegung der Spindel durch einmaliges Drücken der Steuerhülse erzielt, welche durch jeweils erneutes Drücken der Steuerhülse wiederholbar ist. Eine entgegengerichtete Bewegung der Steuerhülse bewirkt hingegen keine Drehung der Spindel.

In weiterer Ausgestaltung der Erfindung ist die Steuerhülse über ein Federelement der Steuerscheibe entgegengerichtet vorgespannt. Hierdurch ist eine automatische vertikale Rückbewegung der Steuerhülse nach Betätigung in die Ausgangslage erzielt. Bevorzugt ist das Federelement durch eine Spiralfeder, insbesondere eine Spiraldruckfeder gebildet.

In Weiterbildung der Erfindung ist auf das Kopfstück die Kurvenbahn der Spindel umschließend eine Führungshülse angeordnet, in der die Steuerhülse vertikal verschiebbar geführt ist und durch welche die Steuerhülse hindurchragt. Hierdurch ist eine vertikale Führung der Steuerhülse erzielt. Zudem ist durch die Führungshülse ein gehäuseartiger Schutz der in die Spindel eingebrachten Kurvenbahn erzielt.

In Ausgestaltung der Erfindung weist die Innenmantelfläche der Führungshülse zumindest bereichsweise einen Innenmehrkant auf, der mit einem an der Steuerhülse angeformten Außenmehrkant korrespondiert. Hierdurch ist eine definierte Führungsbahn der Steuerhülse innerhalb der Führungshülse erzielt.

In weiterer Ausgestaltung der Erfindung weist die Innenmantelfläche der Führungshülse endseitig zumindest bereichsweise einen Innenmehrkant auf, der mit einem an dem Kopfstück angeformten Außenmehrkant korrespondiert. Hierdurch ist eine drehfeste Anordnung der Führungshülse an dem Kopfstück erzielt.

In weiterer Ausgestaltung der Erfindung sind der Innenmehrkant der Führungshülse und der Außenmehrkant der Steuerhülse sowie der Außenmehrkant des Kopfstücks jeweils unregelmäßig ausgebildet. Hierdurch ist eine definierte Ausrichtung von Führungshülse, Innenhülse und Kopfstück bei der Montage des Ventiloberteils erzielt. Hierzu sind bevorzugt die Konturen von Innenmehrkant und Außenmehrkant der Steuerhülse, der Führungshülse und des Kopfstücks zueinander identisch ausgebildet.

In Weiterbildung der Erfindung ist die Führungshülse mit dem Kopfstück formschlüssig lösbar verbunden. Hierdurch ist eine einfache Montage erzielt sowie eine Demontage des Ventiloberteils zu Wartungs- oder Reparaturzwecken ermöglicht.

In Ausgestaltung der Erfindung ist an dem Kopfstück eine zumindest bereichsweise radial umlaufende Rastnase angeformt, die in eine in der Innenwandung der Führungshülse zumindest bereichsweise umlaufend eingebrachte Rastnut eingreift. Hierdurch ist eine einfache Montage der Führungshülse an dem Kopfstück ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

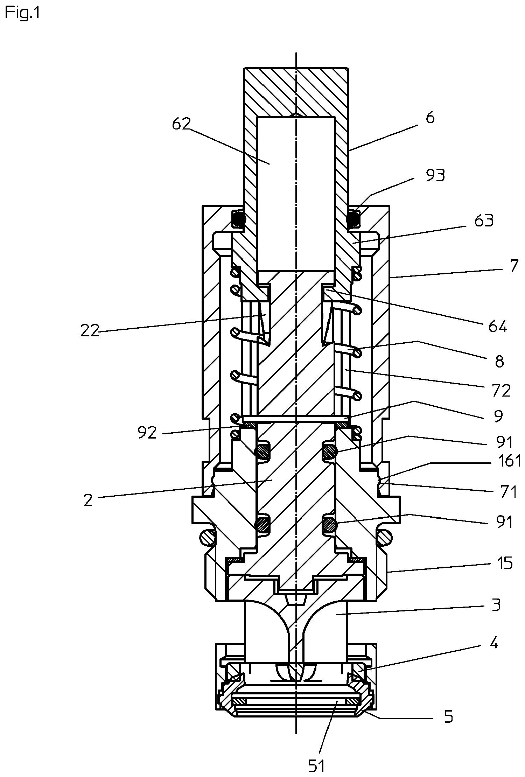

- Figur 1: die schematische Darstellung eines Ventiloberteils im Längsschnitt;

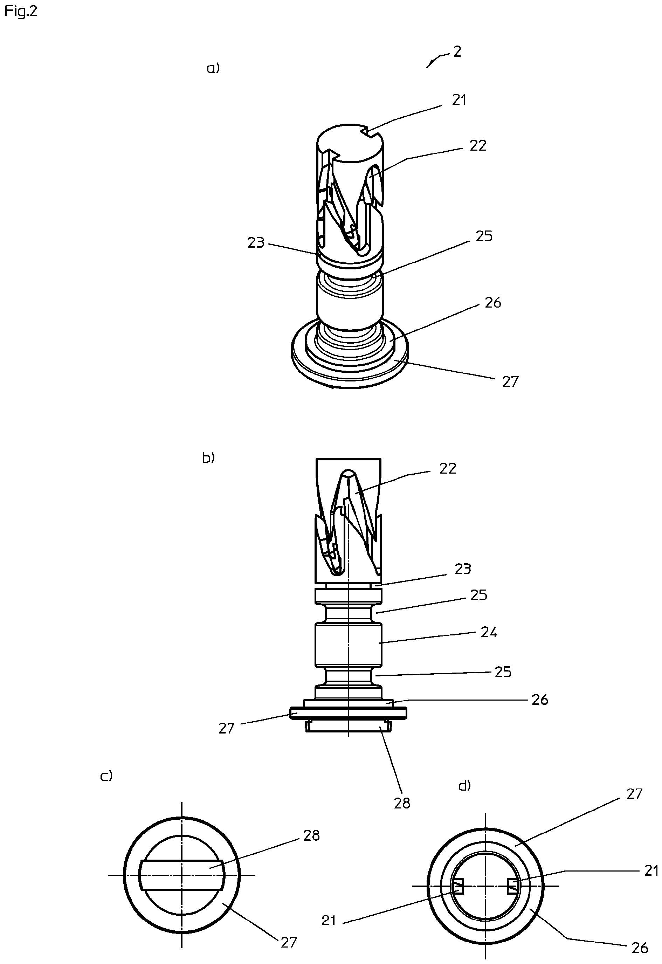

- Figur 2: die schematische Darstellung der Spindel des Ventiloberteils aus Figur 1
a) in räumlicher Darstellung;
b) in der Seitenansicht;
c) in der Ansicht von unten;
d) in der Draufsicht;

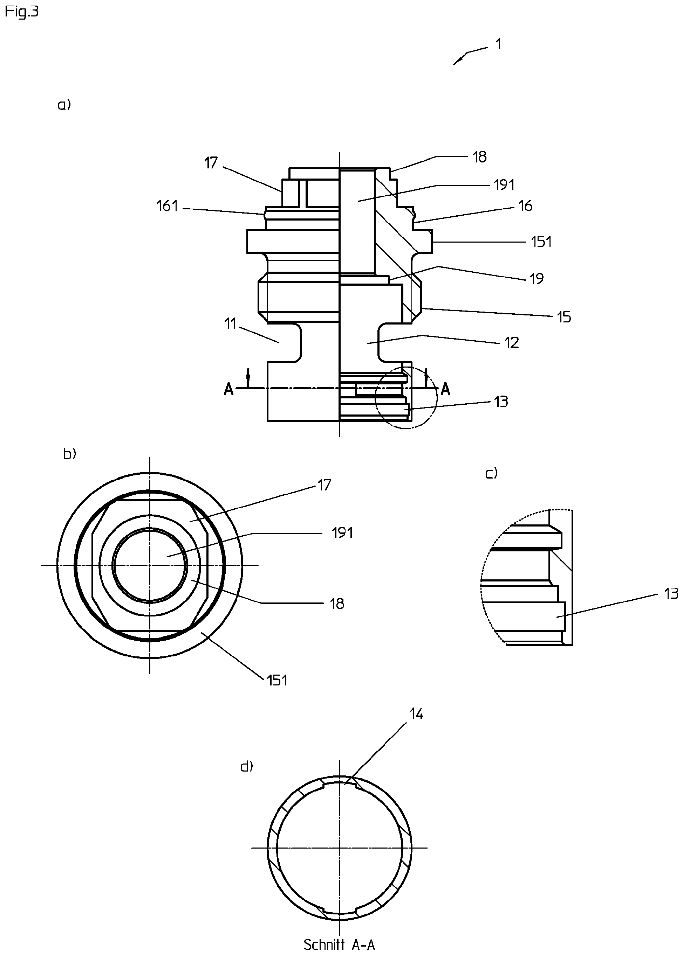

- Figur 3: die schematische Darstellung des Kopfstücks des Ventiloberteils aus Figur 1
a) im Teilschnitt;
b) in der Draufsicht;
c) in Detaildarstellung des Ausschnitt "Z";
d) im Querschnitt A-A;

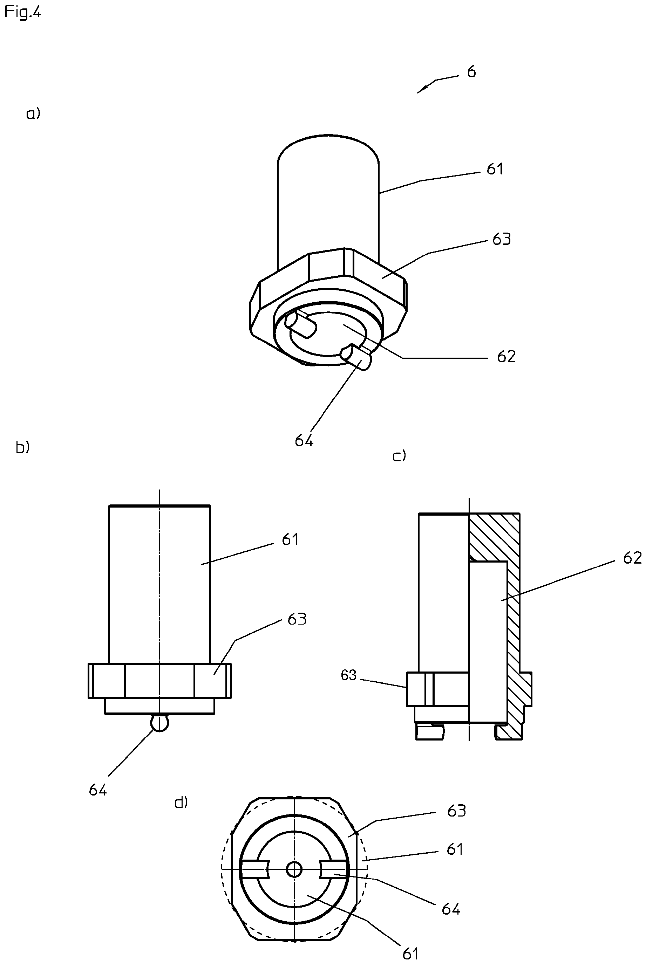

- Figur 4: die schematische Darstellung der Steuerhülse des Ventiloberteils aus Figur 1
a) in räumlicher Darstellung;
b) in der Seitenansicht;
c) im Teilschnitt;
d) in der Ansicht von unten;

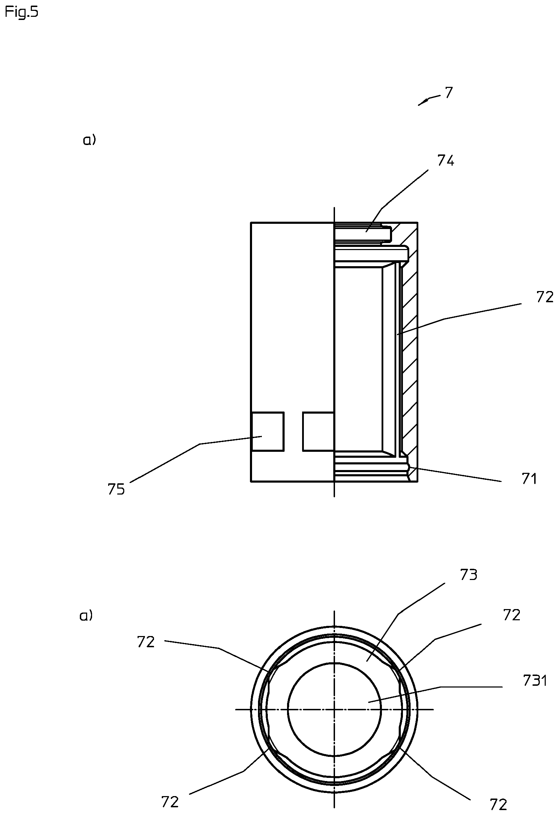

- Figur 5: die schematische Darstellung der Führungshülse des Ventiloberteils aus Figur 1
a) im Teilschnitt;
b) in der Ansicht von unten;
- Figur 6: die schematische Darstellung der Steuerscheibe des Ventiloberteils aus Figur 1
a) in der Ansicht von unten;
b) im Teilschnitt:
c) in der Draufsicht.

Das als Ausführungsbeispiel gewählte Ventiloberteil weist ein Kopfstück 1 auf, das von einer in ihm radial geführten Spindel 2 axial mittig durchsetzt ist. Über die Spindel 2 ist ein Ventil betätigbar, dass bei Montage des Ventiloberteils in dem Gehäuse einer Armatur mit dessen Ventilsitz zur Anlage kommt. Das Ventil ist von einer Steuerscheibe 3 und einer Einlassscheibe 4 gebildet. Die Steuerscheibe 3 ist mit der Spindel 2 formschlüssig verbunden und im Kopfstück 1 radial geführt. An ihrer der Spindel 2 abgewandten Seite der Steuerscheibe 3 ist die Einlassscheibe 4 in dem Kopfstück 1 drehfest angeordnet. An die Einlassscheibe 4 schließt sich eine Lippendichtung 5 an, die einen Stützring 51 aufnimmt und die in montiertem Zustand mit dem Ventilsitz des Gehäuses einer Armatur zur Anlage kommt. Auf die Spindel 2 ist an ihrem dem Kopfstück 1 abgewandten Ende eine Steuerhülse 6 aufgebracht, die eine auf das Kopfstück 1 montierte Führungshülse 7 durchdringt, gegen welche die Steuerhülse 6 über eine Spiralfeder 8 vorgespannt ist.

Das Kopfstück 1 besteht aus einem symmetrischen Hohlkörper, dessen beide Stirnflächen offen sind. Auf seiner der Steuerhülse 6 abgewandten Seite weist das Kopfstück 1 diametral zueinander zwei Durchtrittsfenster 11 auf, die von Längsstegen 12 begrenzt sind. Beabstandet zu den Durchtrittsfenstern 11 ist in dem Kopfstück 1 innen eine Hinterdrehung 13 zur Aufnahme der Lippendichtung 5 eingebracht. Im Anschluss daran sind zwei sich diametral gegenüberliegende Ausnehmungen 14 angeordnet.

Im Anschluss an die Durchtrittsfenster 11 ist das Kopfstück 1 außen mit einem Anschlussgewinde 15 versehen. Mithilfe des Anschlussgewindes 15 ist das Kopfstück 1 in das Gehäuse einer Armatur einschraubbar. An das Anschlussgewinde 15 schließt sich ein umlaufender Kragen 151 an. Beabstandet zu dem Kragen 151 ist in dem Kopfstück 1 ein zylindrischer Abschnitt 16 vorgesehen, an dem außen umlaufend ein Raststeg 161 angeformt ist. An den zylindrischen Abschnitt 16 schließt sich ein Mehrkantabschnitt 17 an, der im Ausführungsbeispiel eine unregelmäßige Achtkant-Kontur aufweist. An den Mehrkantabschnitt 17 schließt sich ein durchmesserreduzierter Absatz 18 an, der einen Anschlag für die Spiralfeder 8 ausbildet. Innen ist in Höhe des Anschlussgewindes 15 ein zweistufiger Absatz 19 angeordnet, der in eine durchmesserreduzierte Bohrung 191 übergeht.

Die Spindel 2 ist im Wesentlichen massiv ausgeführt. Sie ist an ihrer dem Wasserzulauf abgewandten Stirnseite mit zwei diametral zueinander angeordneten Nockeneinführungen 21 versehen, die in einer umlaufend in der Mantelfläche eingebrachten Kurvenbahn 22 münden. Die Kurvenbahn 22 ist im Ausführungsbeispiel sägezahnförmig ausgebildet, wobei vier um 90° versetzt zueinander Sägezähne angeordnet sind. Die Nockeneinführungen 51 münden jeweils in der Spitze eines Sägezahns der Kurvenbahn 22. Beabstandet zu der Kurvenbahn 22 ist eine umlaufende Nut 23 zur Aufnahme eines Sicherungsrings 9 angeordnet, an die sich ein zylindrischer Abschnitt 24 anschließt. In dem zylindrischen Abschnitt 24 sind zwei Einstiche 25 zur Aufnahme eines O-Rings 91 eingebracht. Der zylindrische Abschnitt 24 geht in einen durchmessererweiterten Absatz 26 über, an den sich eine Scheibe 27 anschließt, die auf ihrer der Kurvenbahn 22 abgewandten Seite einen Mitnehmer 28 aufweist.

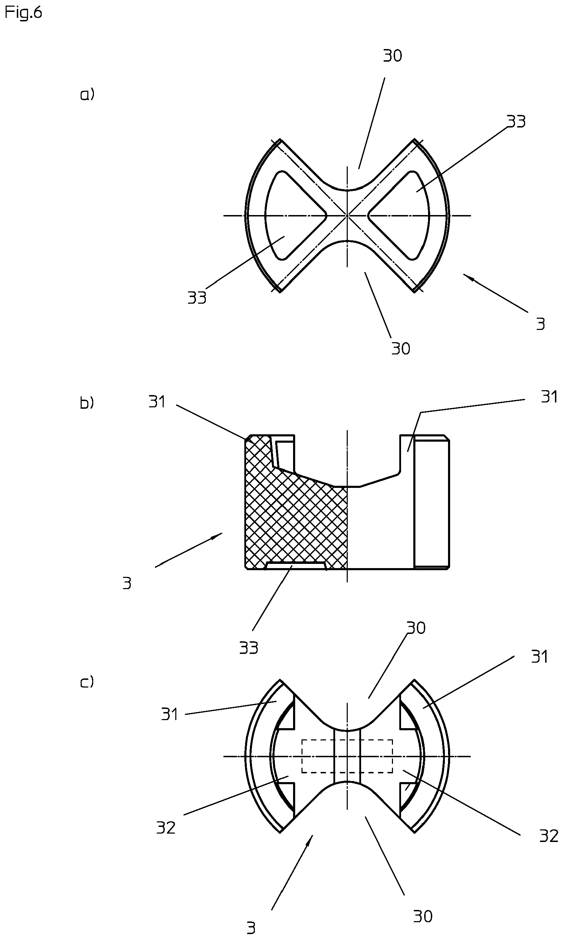

Die Steuerscheibe 3 hat eine im Wesentlichen tonnenförmige Ausbildung, aus der zwei sich gegenüberliegende Kreisausschnitte 30 ausgenommen sind (vgl. Figur 6). Die Kreisausschnitte 30 weisen im Ausführungsbeispiel einen Winkel von etwa 90° auf. Auf ihrer der Spindel 2 zugewandten Seite weist die Steuerscheibe 3 einen ringförmigen Ansatz 31 auf. Der ringförmige Ansatz 31 umfasst im montierten Zustand den Mitnehmer 28 der Spindel 2. Am Fuß des Ansatzes 31 sind Ausnehmungen 32 ausgebildet, in die der Mitnehmer 28 eingreift. Auf ihrer der Spindel 2 abgewandten Stirnseite sind in der Steuerscheibe 3 zwei sich gegenüberliegende sektorförmige Vertiefungen 33 vorgesehen.

Die Einlassscheibe 4 weist auf ihrem Umfang zwei - nicht dargestellte - sich diametral gegenüberliegende Nasen auf, mit denen sie in die Ausnehmungen 14 des Kopfstücks 1 eingreift. Die Einlassscheibe 4 ist so drehfest in dem Kopfstück 1 gehalten. Die Einlassscheibe 4 weist sektorförmige Durchtrittsöffnungen auf. Im Ausführungsbeispiel sind zwei sich diametral gegenüberliegende Durchtrittsöffnungen vorgesehen.

Die Steuerhülse 6 besteht im Wesentlichen aus einem Zylinderstück 61, das entlang seiner Rotationsachse mit einer Sackbohrung 62 versehen ist. Beabstandet zu Ihrem offenen Ende ist an die Außenmantelfläche der Steuerhülse ein umlaufender Mehrkantkragen 63 angeformt. Der Mehrkantkragen 63 weist eine unregelmäßige Mehrkantkontur auf, die im Ausführungsbeispiel als Achtkant ausgebildet ist. Auf ihrer offenen Stirnseite sind an die Steuerhülse 6 diametral zueinander zwei Nocken 64 angeformt. Die Nocken 64 sind zylinderförmig ausgebildet und überragen den durch die Sackbohrung 62 begrenzte stirnseitige Ringfläche in Richtung der Rotationsachse der Steuerhülse 6. Die Nocken 64 greifen somit radial in den Bereich der Sackbohrung 62 ein.

Die Führungshülse 7 ist im Wesentlichen hohlzylindrisch ausgebildet und weist an ihrem dem Kopfstück 1 zugewandten Ende innen eine umlaufende Rastnut 71 zur Aufnahme des Raststeges 161 des Kopfstücks 1 auf. Beabstandet zu Rastnut 71 sind in die Innenmantelfläche der Führungshülse 7 vier Längsnuten 72 mit dreieckförmigen Querschnitt eingebracht. Durch die Längsnut 72 ist eine Mehrkantkontur zur Aufnahme des Mehrkantkragens 63 der Steuerhülse 6 gebildet, über den die Steuerhülse 6 entlang der Längsnuten 72 innerhalb der Führungshülse 7 verschiebbar geführt ist. An ihrer der Rastnut 71 gegenüberliegenden Oberseite ist an die Führungshülse 7 ein nach innen kragender Führungsring 73 angeformt, der dessen Durchtrittsbohrung einrahmend mit einem Einstich 74 zur Aufnahme eines O-Rings 93 versehen ist. An ihrem dem Kopfstück 1 zugewandten Ende weist die Führungshülse 7 weiterhin umlaufend rechteckförmige Eingriffe 75 auf. Die Eingriffe 75 dienen der Aufnahme eines Handhabungswerkzeugs, beispielsweise eines Maulschlüssels.

Die Spindel 2 liegt mit ihrem Absatz 26 an dem zweistufigen Absatz 19 des Kopfstücks 1 an und ist über den Sicherungsring 9, der im Ausführungsbeispiel als Sprengring ausgebildet ist und der in die Nut 23 der Spindel 2 eingreift, axial in dem Kopfstück 1 gehalten. Zwischen dem Sicherungsring 9 und dem Kopfstück 1 ist eine in Form eines Gleitrings ausgebildete Scheibe 92 angeordnet. Auf den aus dem Kopfstück 1 herausragenden Teil der Spindel 2 ist die Steuerhülse 6 aufgestülpt, wobei die Nocken 64 der Steuerhülse 6 durch die Nockeneinführungen 21 in die Kurvenbahn 22 der Spindel 2 eingeführt sind. Auf das Kopfstück 1 ist weiterhin die Führungshülse 7 gestülpt, wobei der Raststeg 161 des zylindrischen Abschnitts 16 des Kopfstücks 1 in die Rastnut 71 der Führungshülse 7 eingreift, wodurch die Führungshülse 7 mit dem Kopfstück 1 formschlüssig lösbar verbunden ist. Das Zylinderstück 61 der Steuerhülse 6 tritt dabei durch die Bohrung 731 des Führungsrings 73 der Führungshülse 7 hindurch, wobei der Mehrkantkragen 63 der Steuerhülse 6 in den Längsnuten 72 der Führungshülse 7 verschiebbar gelagert ist. Die Steuerhülse 6 ist mit Ihrem Mehrkantkragen 63 über die Spiralfeder 8 gegen den Führungsring 73 der Führungshülse 7 vorgespannt.

Zur Betätigung des Ventiloberteils wird die Steuerhülse 6 in Richtung Kopfstück 1 gedrückt, wodurch die an die Steuerhülse 6 angeformten Nocken 64 entlang der Kurvenbahn 22 der Spindel 2 bewegt wird. Die Steuerhülse 6 ist über den Mehrkantkragen 63 in der Führungshülse 7 drehfest geführt, so dass die Spindel 2 durch die Bewegung der Nocken 64 entlang der Kurvenbahn 22 um ihre Rotationsachse gedreht wird. Im Ausführungsbeispiel ist durch eine Betätigung der Steuerhülse 6 eine Drehung der Spindel 2 um 90° bewirkt. Durch die Drehung der Spindel 2 wird gleichsam die formschlüssig mit dieser verbundene Steuerscheibe 3 relativ zur drehfest in dem Kopfstück 1 angeordneten Einlassscheibe 4 bewegt, wodurch die Betätigung des durch die Steuerscheibe 3 und die Einlassscheibe 4 gebildeten Ventils bewirkt ist. Nach Betätigung der Steuerhülse 6 wird diese über die Rückstellkräfte der Spiralfeder 8 wieder in ihrer Ausgangsposition verbracht. Aufgrund der sägezahnförmigen Ausbildung der Kurvenbahn 22 der Spindel 2 ist durch die Aufwärtsbewegung der Steuerhülse 6 bzw. der an dieser angeformten Nocken 64 innerhalb der Kurvenbahn 22 keine Drehung der Spindel 2 bewirkt. Das Ventiloberteil bleibt geöffnet. Durch ein nochmaliges Drücken der Steuerhülse 6 in Richtung Kopfstück 1 bewirkt wiederum eine Drehung der Spindel 2 sowie der mit dieser formschlüssig verbundenen Steuerscheibe 3 relativ zur Einlassscheibe 4 um 90° in dieselbe Drehrichtung, wodurch das Ventiloberteil geschlossen wird.

## Patentansprüche

1. Ventiloberteil mit einem Kopfstück (1), das von einer Spindel (2) axial durchsetzt ist, über die ein Ventil betätigbar ist, das durch eine relativ zu einer Einlassscheibe (4) drehbare Steuerscheibe (3) gebildet ist, **dadurch gekennzeichnet, dass** in der Mantelfläche der Spindel (2) an ihrer der Steuerscheibe (3) entgegen gerichteten Seite umlaufend eine Kurvenbahn (22) eingebracht ist, in die wenigstens ein Nocken (64) einer drehfest angeordneten, auf die Spindel (2) endseitig aufgestülpten Steuerhülse (6) eingreift, die axial entlang der Spindel (2) bewegbar ist, wobei die Kurvenbahn (22) derart ausgebildet ist, dass durch eine vertikale Verschiebung der Steuerhülse (6) entlang der Spindel (2) eine definierte Drehung der Spindel (2) bewirkt ist.

2. Ventiloberteil nach Anspruch 1, **dadurch gekennzeichnet, dass** die Steuerhülse (6) zwei bevorzugt diametral zueinander angeordnete Nocken (64) aufweist, die besonders bevorzugt an die Steuerhülse (6) angeformt sind.

3. Ventiloberteil nach Anspruch 1 oder 2, **dadurch gekennzeichnet, dass** die Kurvenbahn (22) sägezahnförmig um die Mantelfläche der Spindel (2) verläuft.

4. Ventiloberteil nach einem der vorgenannten Ansprüche, **dadurch gekennzeichnet, dass** die Steuerhülse (6) über ein Federelement, bevorzugt über eine Spiralfeder (8) der Steuerscheibe (3) entgegen gerichtet vorgespannt ist.

5. Ventiloberteil nach einem der vorgenannten Ansprüche, **dadurch gekennzeichnet, dass** auf das Kopfstück (1) die Kurvenbahn (22) der Spindel (2) umschließend eine Führungshülse (7) angeordnet ist, in der die Steuerhülse (6) vertikal verschiebbar geführt ist und durch welche die Steuerhülse (6) hindurchragt.

6. Ventiloberteil nach Anspruch 5, **dadurch gekennzeichnet, dass** die Innenmantelfläche der Führungshülse (7) zumindest bereichsweise einen Innenmehrkant aufweist, der mit einem an der Steuerhülse (6) angeformten Außenmehrkant korrespondiert.

7. Ventiloberteil nach Anspruch 5 oder 6, **dadurch gekennzeichnet, dass** die Innenmantelfläche der Führungshülse (7) endseitig zumindest bereichsweise einen Innenmehrkant aufweist, der mit einem an dem Kopfstück (1) angeformten Außenmehrkant korrespondiert.

8. Ventiloberteil nach Anspruch 6 oder 7, **dadurch gekennzeichnet, dass** der Innenmehrkant der Führungshülse (7) und der Außenmehrkant der Steuerhülse (6) sowie der Außenmehrkant des Kopfstücks (1) jeweils unregelmäßig ausgebildet sind.

9. Ventiloberteil nach einem oder mehreren der Ansprüche 6 bis 8, **dadurch gekennzeichnet, dass** die Konturen von Innenmehrkant und Außenmehrkant der Steuerhülse (6), der Führungshülse (7) und des Kopfstücks (1) identisch ausgebildet sind.

10. Ventiloberteil nach einem der Ansprüche 5 bis 9, **dadurch gekennzeichnet, dass** die Führungshülse (7) mit dem Kopfstück (1) formschlüssig und bevorzugt lösbar verbunden ist.

11. Ventiloberteil nach einem der Ansprüche 5 bis 10, **dadurch gekennzeichnet, dass** an dem Kopfstück (1) eine zumindest bereichsweise radial umlaufende Rastnase (161) angeformt ist, die in eine in der Innenwandung der Führungshülse (7) zumindest bereichsweise umlaufend eingebrachte Rastnut (71) eingreift.

## Claims

1. Valve top having a head piece (1), which is axially penetrated by a spindle (2), via which a valve is operable, which is formed by a control disc (3) rotatable relative to an inlet disc (4), **characterised in that** a cam track (22) is incorporated in a circumferential manner in the outer surface of the spindle (2) at its side directed opposite the control disc (3), in which the at least one cam (64) of a control sleeve (6), which is non-rotatably mounted and slipped onto the end of the spindle (2), engages, which is axially movable along the spindle (2), wherein the cam track (22) is formed in a manner that by means of vertical displacement of the control sleeve (6) along the spindle (2) a defined rotation of the spindle (2) is effected.

2. Valve top according to claim 1, **characterised in that** the control sleeve (6) has two cams (64) preferably arranged diametrically opposite one another, which are particularly preferably moulded on the control sleeve (6).

3. Valve top according to claim 1 or 2, **characterised in that** the cam track (22) extends around the outer surface of the spindle (2) in a serrated manner.

4. Valve top according to one of the previous claims, **characterised in that** the control sleeve (6) is prestressed in the opposite direction of the control disc (3) via a spring element, preferably via a spiral spring (8).

5. Valve top according to one of the previous claims, **characterised in that** a guide sleeve (7) is arranged on the head piece (1) enclosing the cam track (22) of the spindle (2), in which the control sleeve (6) is vertically displaceably guided and through which the control sleeve (6) protrudes.

6. Valve top according to claim 5, **characterised in that** the inner surface of the guide sleeve (7) has an internal polygon in at least some areas, which corresponds to an external polygon moulded on the control sleeve (6).

7. Valve top according to claim 5 or 6, **characterised in that** the inner surface of the guide sleeve (7) has an internal polygon at its end in at least some areas, which corresponds to an external polygon moulded on the head piece (1).

8. Valve top according to claim 6 or 7, **characterised in that** the internal polygon of the guide sleeve (7) and the external polygon of the control sleeve (6) as well as the external polygon of the head piece (1) are respectively irregularly formed.

9. Valve top according to one or more of claims 6 to 8, **characterised in that** the contours of the internal polygon and external polygon of the control sleeve (6), the guide sleeve (7) and the head piece (1) are identically formed.

10. Valve top according to one of claims 5 to 9, **characterised in that** the guide sleeve (7) is positively and preferably detachably connected to the head piece (1).

11. Valve top according to one of claims 5 to 10, **characterised in that** an at least partially radially circumferential latching lug (161) is moulded on the head piece (1), which engages in a latching groove (71), which is at least partially circumferentially incorporated in the inner wall of the guide sleeve (7).

## Revendications

1. Partie supérieure de soupape comprenant une pièce têtière (1) traversée axialement par une broche (2) qui permet d'actionner une soupape formée par un disque de commande (3) tournant par rapport à un disque d'admission (4), **caractérisée en ce que** dans la surface enveloppante de la broche (2), sur son côté opposé au disque de commande (3), a été ménagée une piste curviligne (22) périphérique dans laquelle engrène au moins une came (64) d'une douille de commande (6) disposée sans pouvoir tourner, emmanchée à l'extrémité de la broche (2), douille qui est déplaçable axialement le long de la broche (2), sachant que la piste curviligne (22) est configurée de sorte qu'un déplacement vertical de la douille de commande (6) le long de la broche (2) provoque une rotation définie de la broche (2).

2. Partie supérieure de soupape selon la revendication 1, **caractérisée en ce que** la douille de commande (6) présente deux cames (64) disposées de manière préférentielle se faisant diamétralement face, dont les formes épousent de façon particulièrement préférentielle celles de la douille de commande (6).

3. Partie supérieure de soupape selon la revendication 1 ou 2, **caractérisée en ce que** la piste curviligne (22) présente un tracé en dents de scie autour de la surface enveloppante de la broche (2).

4. Partie supérieure de soupape selon l'une des revendications précédentes, **caractérisée en ce que** la douille de commande (6) est précontrainte via un élément ressort, de préférence via un ressort hélicoïdal (8) orienté en direction opposée du disque de commande (3).

5. Partie supérieure de soupape selon l'une des revendications précédentes, **caractérisée en ce que** sur la pièce têtière (1) est agencée une douille de guidage (7) qui enferme la piste curviligne (22) de la broche (2), douille dans laquelle la douille de commande (6) est guidée déplaçable verticalement et à travers laquelle la douille de commande (6) fait saillie.

6. Partie supérieure de soupape selon la revendication 5, **caractérisée en ce que** la surface enveloppante intérieure de la douille de guidage (7) présente au moins localement une empreinte polygonale qui épouse un téton polygonal modelé contre la douille de commande (6).

7. Partie supérieure de soupape selon la revendication 5 ou 6, **caractérisée en ce que** la surface enveloppante intérieure de la douille de guidage (7) présente à son extrémité, au moins localement, une empreinte polygonale qui épouse un téton polygonal modelé contre la pièce têtière (1).

8. Partie supérieure de soupape selon la revendication 6 ou 7, **caractérisée en ce que** l'empreinte polygonale de la douille de guidage (7) et le téton polygonal de la douille de commande (6) ainsi que le téton polygonal de la pièce têtière (1) sont configurés chaque fois de manière irrégulière.

9. Partie supérieure de soupape selon l'une ou plusieurs des revendications 6 à 8, **caractérisée en ce que** les contours de l'empreinte polygonale et du téton polygonal de la douille de commande (6), de la douille de guidage (7) et de la pièce têtière (1) sont configurés identiques.

10. Partie supérieure de soupape selon l'une des revendications 5 à 9, **caractérisée en ce que** la douille de guidage (7) est reliée à la pièce têtière (1) par adhérence de formes et de préférence de manière détachable.

11. Partie supérieure de soupape selon l'une des revendications 5 à 10, **caractérisée en ce que** contre la pièce têtière (1) est modelée une saillie de crantage (161) au moins localement périphérique radialement, qui engrène dans une gorge de crantage (71) ménagée au moins localement périphérique dans la paroi intérieure de la douille de guidage (7).
